(19) Europäisches Patentamt
European Patent Office
Office européen des brevets

(11) **EP 4 368 945 B1**

(12) **EUROPÄISCHE PATENTSCHRIFT**

(45) Veröffentlichungstag und Bekanntmachung des Hinweises auf die Patenterteilung:
**24.09.2025 Patentblatt 2025/39**

(21) Anmeldenummer: **22206853.8**

(22) Anmeldetag: **11.11.2022**

(51) Internationale Patentklassifikation (IPC):
***G01C 15/02*** *(2006.01)*

(52) Gemeinsame Patentklassifikation (CPC):
**G01C 15/02**

(54) **SENSORANORDNUNG**

SENSOR ASSEMBLY

AGENCEMENT DE CAPTEURS

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**15.05.2024 Patentblatt 2024/20**

(73) Patentinhaber: **Leuze electronic GmbH + Co. KG**
**73277 Owen/Teck (DE)**

(72) Erfinder:
• **Schick, Jürgen**
**73257 Köngen (DE)**
• **Göhner, Matthias**
**72581 Dettingen/Erms (DE)**

• **Abraham, Sven-Philipp**
**72622 Nürtingen (DE)**
• **Sanzi, Dr., Friedrich**
**73230 Kirchheim/Teck (DE)**
• **Müller, Thomas**
**73119 Zell u.A. (DE)**
• **Struckmeier, Anselm**
**73277 Owen/Teck (DE)**

(74) Vertreter: **Ruckh, Rainer Gerhard**
**Patentanwaltskanzlei Ruckh**
**Jurastraße 1**
**73087 Bad Boll (DE)**

(56) Entgegenhaltungen:
EP-A1- 4 102 326      WO-A1-2021/157136
US-A1- 2003 095 726

**Beschreibung**

Die Erfindung betrifft eine Sensoranordnung.

Derartige Sensoranordnungen dienen generell zur Positionierung einer ersten, mobilen Einheit relativ zu einer stationären Einheit. An der stationären Einheit befindet sich ein Marker, der insbesondere einen Code aufweist, mit welchem die stationäre Einheit identifizierbar ist und in welchem vorteilhaft eine Position der stationären Einheit kodiert ist. Ein typischer Anwendungsfall ist die Positionierung einer mobilen Einheit wie eines AGV (automated guided vehicle) an Regalfächern eines Regalsystems um Gegenstände in den Regalfächern einzulagern bzw. aus diesen zu entnehmen. Die Regalfächer sind dann mit jeweils einem einen Code aufweisenden Marker gekennzeichnet.

Auf der mobilen Einheit befindet sich als erster Sensor ein optischer Sensor mit einem Bildsensor, mittels dessen ein Code eines Markers gelesen wird. Dadurch erfolgt eine Grobpositionierung des AGV derart, dass die Positionsinformation des Codes gelesen wird. Zudem wird die Lage des Codes innerhalb des Bildes des Markers, das mit dem Bildsensor erfasst wird, bestimmt. Auf der mobilen Einheit sind weiterhin zwei räumlich versetzt angeordnete Distanzsensoren angeordnet mit denen zum einen die Distanz des Markers zur mobilen Einheit bestimmt wird. Zum anderen wird aus der Differenz der Distanzwerte der Distanzsensoren ein Neigungswinkel des Markers zur mobilen Einheit abgeleitet um so zu bestimmen, ob die mobile Einheit parallel zu den Regalfächern steht oder geneigt hierzu ist. Damit kann eine Feinpositionierung der mobilen Einheit durchgeführt werden.

Nachteilig hierbei ist, dass die Sensoranordnung konstruktiv aufwändig ist, da neben dem optischen Sensor mit dem Bildsensor weiterhin zwei Distanzsensoren benötigt werden. Auch die Auswertung der Sensorsignale ist aufwändig, da für eine Grobpositionierung der Feinpositionierung die Sensorsignale des optischen Sensors und der Distanzsensoren gemeinsam ausgewertet werden müssen.

Die US 2003/095726 A1 betrifft eine Sensorvorrichtung zur Erfassung von Markierungen auf Printmedien. Die Markierung weist eine geometrische Struktur mit Ringstrukturen und Kreisen auf. Mittels eines Bildsensors wird die Distanz und Neigung der Markierung bestimmt.

Die WO 2021/157136 A1 betrifft ein Positioniersystem, das zur Positionierung eines Fahrzeugs eingesetzt wird. Das Positioniersystem weist einen Bildsensor auf, mit dem ein Marker erfasst wird. Daraus wird die Position und Orientierung des Fahrzeugs relativ zu einer Referenzposition und einer Referenzorientierung ermittelt.

Der Erfindung liegt die Aufgabe zugrunde eine Sensoranordnung der eingangs genannten Art bereitzustellen, welche bei geringem konstruktivem Aufwand eine hohe Funktionalität aufweist.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft eine Sensoranordnung mit einem geometrische Strukturen aufweisenden Marker und mit einem Positionierungssensor. Die geometrischen Strukturen des Markers sind im Positionierungssensor bekannt. Durch Auswertung eines mit dem Positionierungssensor erfassten Bildes der geometrischen Struktur des Markers wird die Distanz und der Neigungswinkel des Markers relativ zum Positionierungssensor bestimmt. Der Positionierungssensor weist einen Bildsensor mit einer optischen Achse auf, wobei mit dem Bildsensor ein Bild des Markers aufgezeichnet wird, anhand dessen die Bestimmung der Distanz und des Neigungswinkels des Markers durchgeführt wird. Mit dem Positionierungssensor wird ein Neigungswinkel des Markers relativ zu einer Ebene senkrecht zur optischen Achse des Bildsensors bestimmt. Der Marker weist einen Code auf, in dem ein Positionswert kodiert wird. Durch Erfassen des Codes wird mittels des Positionierungssensors eine Grobpositionierung durchgeführt. Durch Erfassen der geometrischen Struktur wird eine Feinpositionierung durchgeführt.

Die Erfindung betrifft weiterhin ein entsprechendes Verfahren.

Ein wesentlicher Vorteil der erfindungsgemäßen Sensoranordnung besteht darin, dass mit nur einem Positionierungssensor sowohl die Distanz als auch der Neigungswinkel eines Markers bestimmt werden kann. Damit wird mit geringem konstruktivem Aufwand eine exakte Positionierung des Positionierungssensors relativ zum Marker ermöglicht, so dass die Sensoranordnung für hochpräzise Positionierungsaufgaben eingesetzt werden kann.

Vorteilhaft ist der Positionierungssensor auf einem Fahrzeug angeordnet. Der Marker ist stationär angeordnet.

Mit der erfindungsgemäßen Sensoranordnung kann dann das Fahrzeug hochgenau relativ zu einem mit dem Marker gekennzeichneten Gegenstand positioniert werden. Die Messergebnisse des Positionierungssensors werden hierzu in geeignete Steuerbefehle zur Positionierung des Fahrzeugs umgesetzt.

Insbesondere ist der Positionierungssensor auf einem AGV (automated guided vehicle) angeordnet. Der Marker ist an einem Regalfach angeordnet.

Dabei sind typischerweise die einzelnen Regalfächer jeweils mit einem Marker gekennzeichnet, wobei dann das Fahrzeug durch Identifizieren eines Markers an dem jeweiligen Regalfach positioniert wird.

Die Bestimmung der Distanz und des Neigungswinkels des Markers zum Positionierungssensor erfolgt erfindungsgemäß anhand einer geometrischen Struktur des Markers, die im Positionierungssensor bekannt, d.h. abgespeichert, ist.

Je nach Distanz und Neigungswinkel wird die geometrische Struktur vom Positionierungssensor in unterschiedlicher Weise aufgenommen, d.h. die mit dem Positionierungssensor aufgenommene geometrische Struktur hängt in charakteristischer Weise von der Distanz und dem Neigungswinkel des Markers relativ zum Positionierungssensor ab. Bei bekannter Form der geometrischen Struktur kann somit aus der Aufnahme eines Bildes des Markers in dem Positionierungssensor sowohl ein Maß für die Distanz als auch ein Maß für den Neigungswinkel des Markers bestimmt werden.

Der Positionierungssensor weist einen Bildsensor mit einer optischen Achse auf. Mit dem Bildsensor wird ein Bild des Markers aufgezeichnet anhand dessen die Bestimmung der Distanz und des Neigungswinkels des Markers durchgeführt wird.

Der Bildsensor ist generell zur Aufnahme eines zweidimensionalen Bildes der geometrischen Struktur eines Markers ausgebildet. Hierzu weist der Bildsensor zweckmäßig eine lichtempfindliche Fläche auf.

Insbesondere weist der Bildsensor eine matrixförmige Anordnung von Empfangselementen auf.

Beispielsweise ist der Bildsensor in Form eines CCD- oder CMOS-Arrays ausgebildet.

Vorteilhaft ist dem Bildsensor eine Lochblende vorgeordnet wodurch definierte Abbildungseigenschaften erhalten werden.

Zweckmäßig weist der Positionierungssensor eine Beleuchtungseinheit auf.

Die Beleuchtungseinheit kann beispielsweise aus einer Anordnung von Leuchtdioden bestehen.

Vorteilhaft wird mit dem Positionierungssensor ein Neigungswinkel des Markers relativ zu einer Ebene senkrecht zur optischen Achse des Bildsensors bestimmt.

Liegt der Marker exakt in einer Ebene senkrecht zur optischen Achse werden dessen geometrische Strukturen unverzerrt auf dem Bildsensor abgebildet. Ist die Ebene des Markers jedoch geneigt zur Ebene senkrecht zur optischen Achse, werden die geometrischen Strukturen entsprechend der Neigung unsymmetrisch verzerrt auf dem Bildsensor abgebildet. Aus der verzerrten Abbildung der geometrischen Strukturen kann in dem Positionierungssensor der Neigungswinkel des Markers relativ zum Sensor errechnet werden.

Ein wesentlicher Vorteil hierbei besteht darin, dass der Neigungswinkel des Markers unabhängig von einer Verschiebung des Markers in einer Ebene senkrecht zur optischen Achse bestimmt wird.

Dies bedeutet, dass eine Verschiebung des Markers in einer senkrecht zur optischen Achse des Bildsensors verlaufenden Ebene aus Gleichungen zur Bestimmung des Neigungswinkels herausgerechnet werden kann, so dass die Bestimmung des Neigungswinkels unabhängig von einer solchen Verschiebung bestimmt werden kann.

Als weitere Messgröße kann mit dem Positionierungssensor die Position des Markers in einer Ebene senkrecht zur optischen Achse des Bildsensors bestimmt werden.

Generell kann durch Erfassen der geometrischen Struktur des Markers mittels des Positionierungssensors eine Feinpositionierung durchgeführt werden.

Gemäß einer konstruktiv vorteilhaften Ausgestaltung sind die geometrischen Strukturen von parallel in Abstand zueinander verlaufenden Balkenelementen gebildet.

Die Balkenelemente weisen somit einfache geometrische Formen auf, anhand derer besonders gut die Distanz und der Neigungswinkel des Markers relativ vom Positionierungssensor bestimmt werden kann.

Die Balkenelemente sind vorteilhaft rechteckförmig und weisen alle dieselbe Breite auf.

Erfindungsgemäß weist der Marker einen Code auf.

Insbesondere ist der Code ein DataMatrix-Code.

Durch Erfassen des Codes wird mittels des Positionierungssensors eine Grobpositionierung durchgeführt.

Im Code ist dabei ein Positionswert kodiert.

Durch Erfassen der geometrischen Struktur, d.h. der Balkenelemente des Markers, wird eine Feinpositionierung durchgeführt.

Gemäß einer geometrisch vorteilhaften Ausgestaltung ist der Code im Zentrum des Markers angeordnet.

Dann sind beidseits des Codes zwei Gruppen von Balkenelementen vorhanden.

Zweckmäßig sind die Gruppen der Balkenelemente spiegelsymmetrisch zum Code.

Durch Analyse jeweils eines Paars von spiegelsymmetrisch zum Code liegenden Balkenelementen lässt sich der Neigungswinkel des Markers relativ zum Positionierungssensor besonders einfach und gut bestimmen.

Die Balkenelemente sind dabei vorteilhaft so angeordnet, dass sowohl für geringe als auch große Distanzen des Markers eine genaue Bestimmung des Neigungswinkels möglich ist. Dabei werden bei geringer und großer Distanz unterschiedliche Balkenelemente zur Neigungswinkel-Bestimmung herangezogen.

Die Erfindung wird im Folgenden anhand der Zeichnungen erläutert. Es zeigen:

Figur 1: Schematische Darstellung eines Ausführungsbeispiels der erfindungsgemäßen Sensoranordnung mit einem Positionierungssensor und einem Marker.

Figur 2: Darstellung eines Markers für die Sensoranordnung gemäß Figur 1.

Figur 3: Teildarstellung des Markers gemäß Figur 2 in einer x-y-Ebene.

Figur 4: Teildarstellung des Markers gemäß Figur 2 in einer x-z-Ebene.

Figur 5: Sensoranordnung gemäß Figur 1 mit einem zum Positionierungssensor geneigten Marker.

Figur 6: Teildarstellung des Markers gemäß Figur 5 in der x-z-Ebene.

Figur 7: Teildarstellung des Markers gemäß Figur 5 in der x-y-Ebene.

Figur 8: Teildarstellung des Markers der Sensoranordnung gemäß Figur 1 in der x-z-Ebene mit einer horizontalen Verschiebung des Markers.

Figur 9: Teildarstellung des Markers der Sensoranordnung gemäß Figur 1 in der x-z-Ebene mit einer horizontalen Verschiebung und Rotation des Markers.

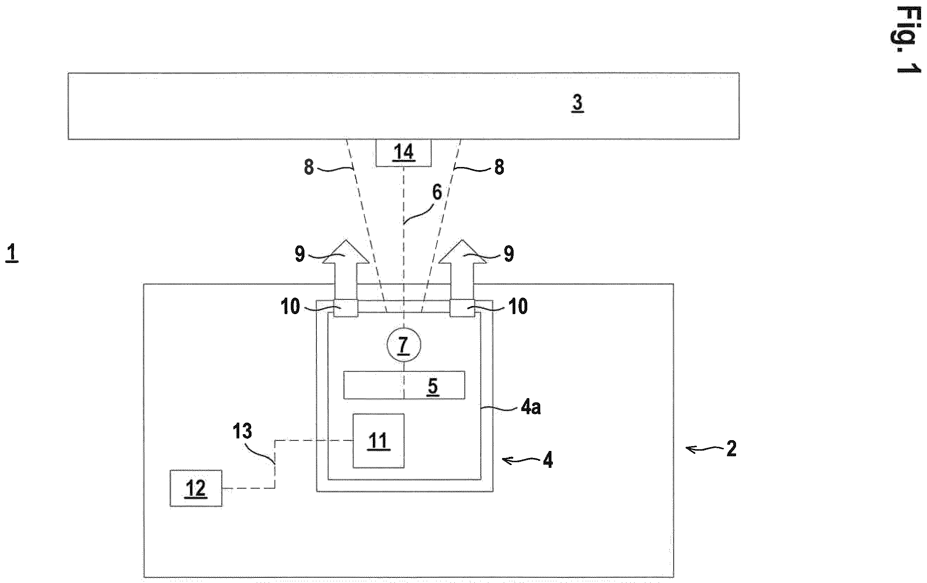

Figur 1 zeigt schematisch ein Ausführungsbeispiel der erfindungsgemäßen Sensoranordnung 1, die zur Positionierung einer mobilen Einheit in Form eines AGV 2 relativ zu einem stationär angeordneten Regalfach 3 eines Regalsystems dient.

Auf dem AGV 2 ist ein Positionierungssensor 4 angeordnet, dessen Komponenten in einem Gehäuse 4a integriert sind. Der Positionierungssensor 4 umfasst einen Bildsensor 5, der eine in einer Bildebene angeordnete Anordnung von Empfangselementen aufweist. Die optische Achse 6 des Bildsensors 5 verläuft senkrecht zu dieser Bildebene. Der Bildsensor 5 kann beispielsweise von einem CCD- oder CMOS-Array gebildet sein.

Dem Bildsensor 5 ist eine Lochblende 7 vorgeordnet. Der Bildsensor 5 mit der Lochblende 7 bildet eine Lochkamera. Durch die Lochblende 7 ist das Sichtfeld 8 des Bildsensors 5 vorgegeben. Anstelle einer Lochblende 7 kann auch eine Linsenanordnung vorgesehen sein.

Der Positionierungssensor 4 umfasst weiterhin eine Beleuchtungseinheit mit einer zur Lochblende 7 konzentrischen Anordnung von Lichtstrahlen 9 emittierenden Leuchtdioden 10.

Schließlich weist der Positionierungssensor 4 eine Rechnereinheit 11 zur Auswertung der im Bildsensor 5 generierten Sensorsignale auf.

Das AGV 2 wird mit einer Steuereinheit 12 gesteuert. Die Steuereinheit 12 ist mit der Rechnereinheit 11 des Positionierungssensors 4 über eine Leitung 13 verbunden.

Am Regalfach 3 ist ein Marker 14 befestigt, der zur Identifizierung des Regalfachs 3 dient und weiterhin zur Positionierung des AGV 2 relativ zum Regalfach 3 genutzt wird.

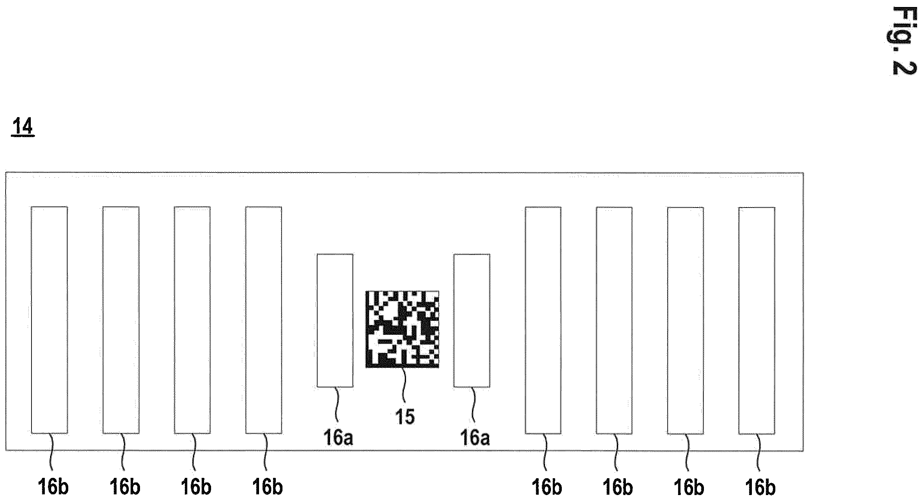

Figur 2 zeigt ein Ausführungsbeispiel des Markers 14 der Sensoranordnung 1 gemäß Figur 1. Der Marker 14 ist ein Flächenelement auf dem unterschiedliche Strukturen aufgedruckt sind. Die Länge und Breite des Markers 14 liegt vorteilhaft jeweils im cm-Bereich. Dabei ist im Zentrum des Markers 14 ein Code in Form eines DataMatrix-Codes 15 vorhanden. Alternativ kann ein QR-Code vorgesehen sein. Im DataMatrix-Code 15 kann eine Identifizierungskennung des Regalfachs 3 und dessen Position im Regalsystem kodiert sein. Als geometrische Strukturen sind Strukturen und Balkenelemente 16a, 16b vorhanden. Im vorliegenden Fall sind zwei Gruppen von Balkenelementen 16a, 16b vorhanden, die spiegelsymmetrisch zum DataMatrix-Code 15 angeordnet sind.

Jede Gruppe von Balkenelementen 16a, 16b weist eine unmittelbar an den DataMatrix-Code 15 anschließendes kürzeres Balkenelement 16a an. Daran schließen vier identische Balkenelemente 16b mit einer größeren Länge an. Die Breiten der Balkenelemente 16a, 16b jeder Gruppe sind identisch. Die Balkenelemente 16a, 16b jeder Gruppe sind äquidistant angeordnet. Die Längsachsen aller Balkenelemente 16a, 16b verlaufen parallel zueinander.

Die Balkenelemente 16a, 16b bilden geometrische Strukturen, die in der Rahmeneinheit des Positionierungssensors 4 abgespeichert sind.

Durch Lesen des DataMatrix-Codes 15 kann eine Grobpositionierung des AGV 2 relativ zum Regalfach 3 erfolgen.

Durch Erfassen und Auswerten der geometrischen Strukturen des Markers 14 kann eine Feinpositionierung des AGV 2 relativ zum Regalfach 3 erfolgen, wobei diese Auswertung in der Rechnereinheit 11 oder in der Steuereinheit 12 erfolgen kann. Abhängig von den erfassten geometrischen Strukturen werden Steuerbefehle für die Steuereinheit 12 zur Positionierung des AGV 2 generiert.

Erfindungsgemäß wird durch Auswertung der geometrischen Strukturen die Distanz des Markers 14 zum Positionierungssensor 4 bestimmt. Zudem wird ein eventuell vorhandener Neigungswinkel des Markers 14 bestimmt, d.h. eine Neigung der Ebene des Markers 14 relativ zu einer Ebene senkrecht zur optischen Achse 6 des Bildsensors 5.

Weiterhin wird mit dem Positionierungssensor 4 die Position des Markers 14 in einer Ebene senkrecht zur optischen Achse 6 des Bildsensors 5 bestimmt.

Vorteilhaft wird zur Distanz- und Neigungswinkel-Bestimmung ein Paar von symmetrisch zum DataMatrix-Code 15 liegenden Balkenelementen 16a, 16b verwendet.

Bei geringen Distanzen des Markers 14 zum Positionierungssensor 4 werden ggf. nicht die gesamten geometrischen Strukturen auf dem Bildsensor 5 abgebildet. In diesem Fall werden vorteilhaft die inneren Balkenelemente 16a zur Distanz- und Neigungswinkel-Bestimmung herangezogen. Bei größeren Distanzen werden vorteilhaft äußere Balkenelemente 16b zur Distanz- und Neigungswinkel-Bestimmung herangezogen.

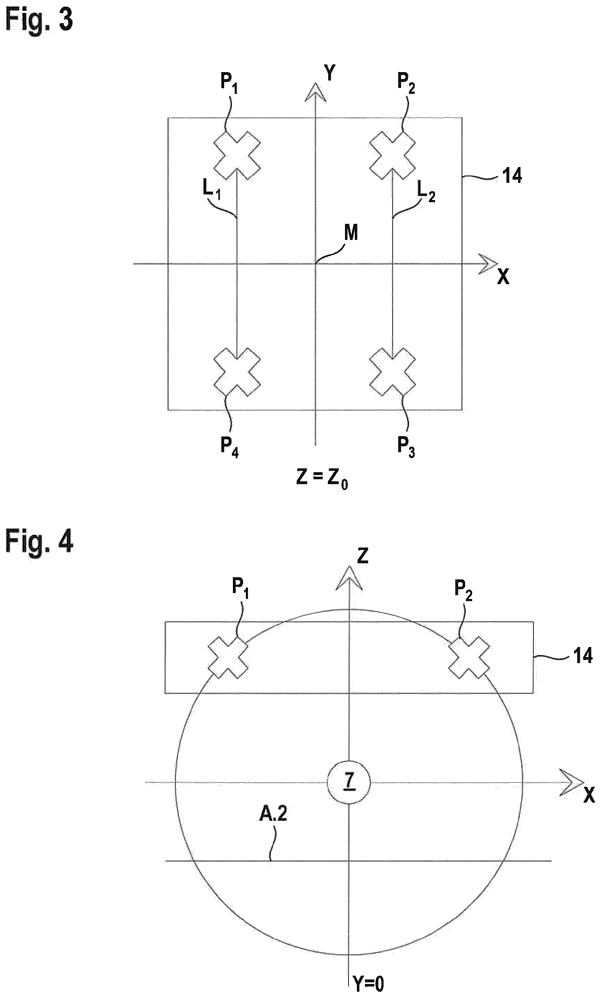

Die Distanz- und Neigungswinkel-Bestimmung ist in den Figuren 3 und 4 anhand zweier Balkenelemente 16b erläutert, wobei für die Balkenelemente 16b insgesamt vier Punkte $P_1$, $P_2$, $P_3$, $P_4$ für die Distanz- und Neigungswinkel-Berechnung herangezogen werden können. Die Linien $L_1$, $L_2$ zwischen den Punkten $P_1$, $P_4$ bzw. $P_2$, $P_3$ repräsentieren die Längsachsen der Balkenelemente 16b. Die optische Achse 6 des Bildsensors 5 verläuft in den gezeigten Beispielen in z-Richtung.

Um den zugehörigen Algorithmus zu erläutern, wird zunächst nicht der gesamte Marker, sondern vereinfacht nur zwei parallele Linien $L_1$, $L_2$ betrachtet, die die Längsachsen zweier Balkenelemente 16b bilden. In Figur 3 sind die Linien $L_1$, $L_2$ in der x-y-Ebene (für konstante z-Koordinate) dargestellt (Sicht von vorne). Der Marker 14 befindet sich an der z-Position $z = z_0$ (zunächst Betrachtung ohne Rotation/Winkel). Die Lochblende 7 befindet sich an der Position x=y=z=0. $z_0$ entspricht demnach dem Abstand zwischen Lochblende 7 und Marker 14.

In Bild 3 ist M der Mittelpunkt des Markers (entspricht dem Mittelpunkt des DataMatrix-Codes 15).

Eine Darstellung des Szenarios in der x-z-Ebene ist in Figur 4 zu sehen. In der x-z-Ebene zeigen die beiden Linien $L_1$, $L_2$ "in die Ebene hinein", weshalb nur die Punkte $P_1$, $P_2$ sichtbar sind. Die z-Achse entspricht hierbei der optischen Achse 6 des Bildsensors 5, weshalb die Bildebene parallel zur x-y-Ebene ist. Die Lochblende 7 befindet sich im Ursprung im Punkt (0,0,0).

Die 4 Punkte $P_1$, $P_2$, $P_3$, $P_4$ aus den Figuren 3, 4 die die zwei Linien $L_1$, $L_2$ definieren, sind wie folgt definiert.

Linie $L_2$ rechts (ohne Rotation):

$$\begin{pmatrix} x_0 \\ y_0 \\ z_0 \end{pmatrix}, \begin{pmatrix} x_0 \\ -y_0 \\ z_0 \end{pmatrix} \in \mathbb{R}^3$$

Linie $L_1$ links (ohne Rotation):

$$\begin{pmatrix} -x_0 \\ y_0 \\ z_0 \end{pmatrix}, \begin{pmatrix} -x_0 \\ -y_0 \\ z_0 \end{pmatrix} \in \mathbb{R}^3$$

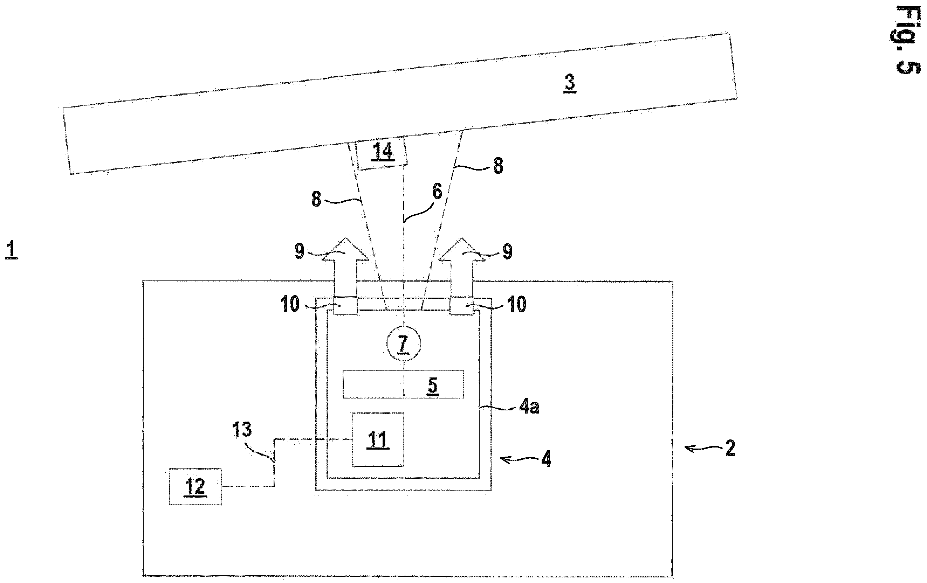

Eine Drehung, d.h. eine Neigung des Markers 14 zum AGV 2 ist in Figur 5 dargestellt. Ziel der Erfindung ist es, diese Drehung $\varphi$ mithilfe des Bildsensors 5 zu schätzen.

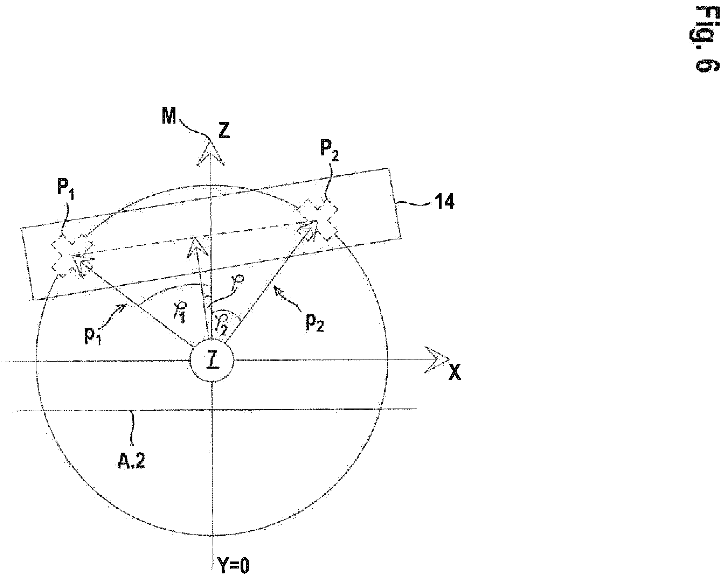

Eine Drehung der optischen Achse 6 entspricht einer Drehung der beiden Linien $L_1$, $L_2$ um die y-Achse bzw. um die Lochblende 7. Demnach können die Vektoren $p_1$, $p_2 \in \mathbb{R}^2$ der Punkte $P_1$, $P_2$ in der x-z-Ebene betrachtet werden. In Figur 6 sind die um die Lochblende 7 rotierten Punkte $P_1$ und $P_2$ grafisch dargestellt.

Es gelten die Zusammenhänge

$$p_1 = r \cdot \begin{pmatrix} \sin(\varphi_1) \\ \cos(\varphi_1) \end{pmatrix},$$

$$p_2 = r \cdot \begin{pmatrix} \sin(\varphi_2) \\ \cos(\varphi_2) \end{pmatrix},$$

$$2 \cdot x_0 = |p_1 - p_2|,$$

$$z_r = r \cdot \cos(\varphi_1), \quad z_l = r \cdot \cos(\varphi_2),$$

$$m = (p_1 + p_2)/2.$$

Der Mittelpunktvektor m zeigt auf den Mittelpunkt zwischen $p_1$ und $p_2$. Dieser gibt den Mittelpunkt des Markers 14 an, entspricht also dem Mittelpunkt M des DataMatrix-Codes 15. r ist der Radius des Kreises K aus Figur 6. $x_0$ ist die x-Koordinate der nicht-rotierten Punkte aus Figur 4. Demnach ist der Abstand zwischen $p_1$ und $p_2$ $|p_1 - p_2| = 2 \cdot x_0$.

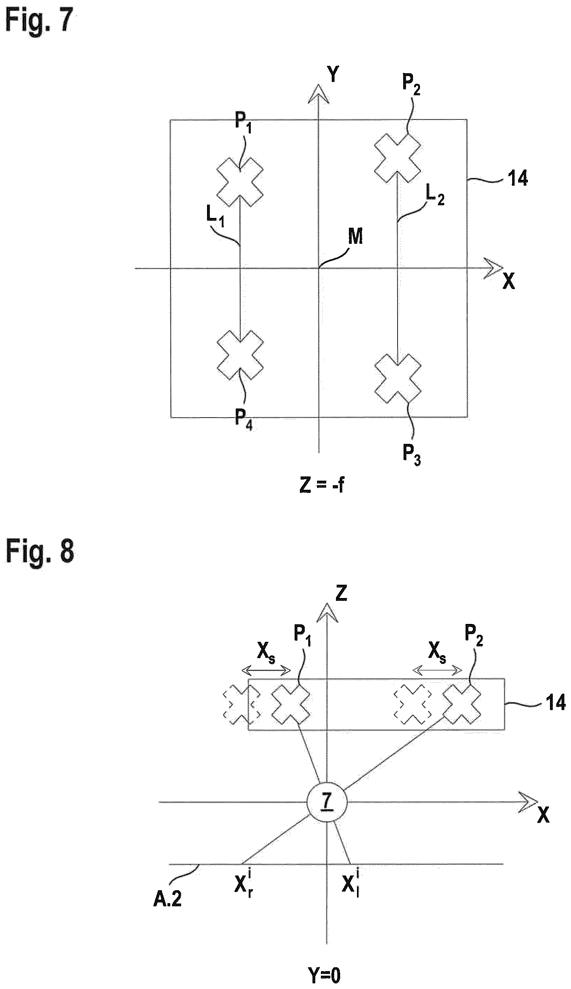

In Figur 7 ist die Abbildung des Markers 14 bzw. der beiden Linien $L_1$, $L_2$ auf die Bildebene A.2 dargestellt. Die z-Koordinaten der beiden Punkte $P_1$, $P_2$ ($z_r$ und $z_l$) können entsprechend der Längen der beiden Linien auf der Bildebene A.2 berechnet werden. Die Berechnung erfolgt mit den bekannten Abbildungsgleichungen für eine Lochkamera.

$f$ ist der Abstand der Lochblende 7 zur Bildebene. Für die Berechnung des Radius r ergibt sich mit den oben genannten Gleichungen

$$r = \sqrt{\frac{x_0^2 + z_r \cdot z_l}{1 - \left(\frac{z_l - z_r}{2 \cdot x_0}\right)^2}}$$

Damit ergibt sich für die Winkel

$$\varphi_1 = \arccos\left(\frac{z_r}{r}\right), \qquad \varphi_2 = \arccos\left(\frac{z_l}{r}\right)$$

Daraus kann der Mittelpunktvektor m berechnet werden. Der Winkel zwischen z-Achse und m liegt dann vor mit

$$\varphi = \text{angle}\left(m, \begin{pmatrix} 0 \\ 1 \end{pmatrix}\right)$$

Die Länge des Vektors m (M aus Figur 6) liefert die Distanz zwischen Marker 14 und Lochblende 7, jedoch nur unter der Bedingung, dass keine horizontale Verschiebung $x_s$ des Markers 14 vorliegt. Dennoch kann bei einer horizontalen Verschiebung $x_s$ der Winkel $\varphi$ trotzdem korrekt geschätzt werden. Die horizontale Verschiebung ist in Figur 8 veranschaulicht.

Die horizontale Verschiebung mit anschließender Rotation kann durch

$$p_r = A \cdot \begin{pmatrix} x_0 + x_s \\ z_0 \end{pmatrix}, \; p_l = A \cdot \begin{pmatrix} -x_0 + x_s \\ z_0 \end{pmatrix} \quad \text{mit} \quad A = \begin{pmatrix} \cos(\varphi) & \sin(\varphi) \\ -\sin(\varphi) & \cos(\varphi) \end{pmatrix}$$

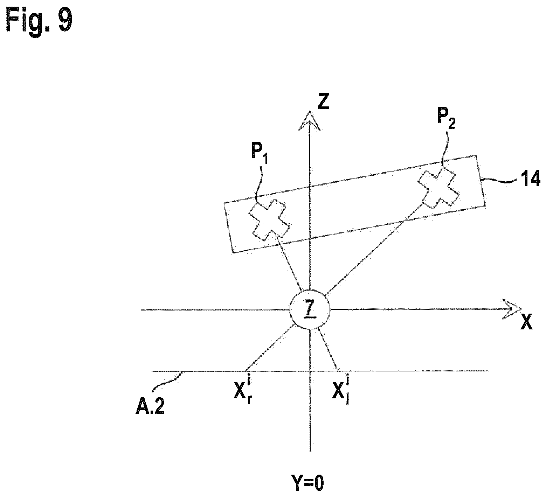

ausgedrückt werden. A ist dabei die Rotationsmatrix, die die beiden verschobenen Punkte um den Winkel $\varphi$ um die Lochblende 7 rotiert. $p_r$ und $p_l$ sind die Vektoren der beiden verschobenen und rotierten Punkte ($P_1$ und $P_2$ aus Figur 9). Mit den Lochkamera-Gleichungen folgt daraus für die Distanz

$$z_0 = \frac{2 \cdot x_0 \cdot \left(f \cdot \cos(\varphi) + x_l^i \cdot \sin(\varphi)\right) \cdot \left(f \cdot \cos(\varphi) + x_r^i \cdot \sin(\varphi)\right)}{f \cdot (x_r^i - x_l^i)}$$

$x_r^i$ und $x_l^i$ sind die x-Koordinaten der beiden Linien $L_1$, $L_2$ abgebildet auf der Bildebene (siehe Figur 9). Hiermit kann die Distanz $z_0$ geschätzt werden, wenn zuvor der Winkel $\varphi$ geschätzt wurde.

Die Distanz $z_0$ und der Winkel $\varphi$ können somit unabhängig von der horizontalen Verschiebung $x_s$ berechnet werden. Zudem ist die Berechnung von Distanz und Winkel unabhängig von der vertikalen Verschiebung.

Eine Drehung des Markers 14 um die z-Achse oder um eine Parallele zur z-Achse kann ebenfalls berücksichtigt werden.

Der Algorithmus ist aufgrund des geringen Rechenaufwands bei der Feinpositionierung des AGV 2 echtzeitfähig einsetzbar.

Der erläuterte Algorithmus ist nur ein Beispiel. Es sind auch andere Algorithmen denkbar. Der Algorithmus kann auch auf Methoden des Machine Learning basieren.

Bezugszeichenliste

(1)          Sensoranordnung
(2)          AGV
(3)          Regalfach
(4)          Positionierungssensor
(4a)         Gehäuse
(5)          Bildsensor
(6)          Achse
(7)          Lochblende
(8)          Sichtfeld
(9)          Lichtstrahl
(10)         Leuchtdiode
(11)         Rechnereinheit
(12)         Steuereinheit
(13)         Leitung
(14)         Marker
(15)         DataMatrix-Code
(16a, 16b)   Balkenelement

(m)    Vektor

**Patentansprüche**

1. Sensoranordnung (1) mit einem geometrische Strukturen aufweisenden Marker (14) und mit einem Positionierungssensor (4), **dadurch gekennzeichnet, dass** die geometrischen Strukturen des Markers (14) im Positionierungssensor (4) bekannt sind, und dass durch Auswertung eines mit dem Positionierungssensor (4) erfassten Bildes der geometrischen Struktur des Markers (14) die Distanz und der Neigungswinkel des Markers (14) relativ zum Positionierungssensor (4) bestimmt wird, dass der Positionierungssensor (4) einen Bildsensor (5) mit einer optischen Achse (6) aufweist, wobei mit dem Bildsensor (5) ein Bild des Markers (14) aufgezeichnet wird, anhand dessen die Bestimmung der Distanz und des Neigungswinkels des Markers (14) durchgeführt wird, wobei mit dem Positionierungssensor (4) ein Neigungswinkel des Markers (14) relativ zu einer Ebene senkrecht zur optischen Achse (6) des Bildsensors (5) bestimmt wird, dass der Marker (14) einen Code aufweist, in dem ein Positionswert kodiert, dass durch Erfassen des Codes mittels des Positionierungssensors (4) eine Grobpositionierung durchgeführt wird, und dass durch Erfassen der geometrischen Struktur eine Feinpositionierung durchgeführt wird.

2. Sensoranordnung (1) nach Anspruch 1, **dadurch gekennzeichnet, dass** mit dem Positionierungssensor (4) die Position des Markers (14) in einer Ebene senkrecht zur optischen Achse (6) des Bildsensors (5) bestimmt wird.

3. Sensoranordnung (1) nach einem der Ansprüche 1 oder 2, **dadurch gekennzeichnet, dass** der Neigungswinkel des Markers (14) unabhängig von einer Verschiebung des Markers (14) in einer Ebene senkrecht zur optischen Achse (6) bestimmt wird.

4. Sensoranordnung (1) nach einem der Ansprüche 1 bis 3, **dadurch gekennzeichnet, dass** der Bildsensor (5) eine matrixförmige Anordnung von Empfangselementen aufweist.

5. Sensoranordnung (1) nach einem der Ansprüche 1 bis 4, **dadurch gekennzeichnet, dass** dem Bildsensor (5) eine Lochblende (7) vorgeordnet ist.

6. Sensoranordnung (1) nach einem der Ansprüche 1 bis 5, **dadurch gekennzeichnet, dass** der Positionierungssensor (4) eine Beleuchtungseinheit aufweist.

7. Sensoranordnung (1) nach einem der Ansprüche 1 bis 6, **dadurch gekennzeichnet, dass** durch Erfassen der geometrischen Struktur des Markers (14) mittels des Positionierungssensors (4) eine Feinpositionierung durchgeführt wird.

8. Sensoranordnung (1) nach einem der Ansprüche 1 bis 7, **dadurch gekennzeichnet, dass** die geometrischen Strukturen von parallel in Abstand zueinander verlaufenden Balkenelementen (16a, 16b) gebildet sind.

9. Sensoranordnung (1) nach Anspruch 8, **dadurch gekennzeichnet, dass** die Balkenelemente (16a, 16b) rechteckförmig sind und alle dieselbe Breite aufweisen.

10. Sensoranordnung (1) nach einem der Ansprüche 8 oder 9, **dadurch gekennzeichnet, dass** der Code ein Data-Matrix-Code (15) oder ein QR-Code ist.

11. Sensoranordnung (1) nach einem der Ansprüche 8 bis 10, **dadurch gekennzeichnet, dass** der Code im Zentrum des Markers (14) angeordnet ist.

12. Sensoranordnung (1) nach einem der Ansprüche 8 bis 11, **dadurch gekennzeichnet, dass** beidseits des Codes zwei Gruppen von Balkenelementen (16a, 16b) vorhanden sind.

13. Sensoranordnung (1) nach Anspruch 12, **dadurch gekennzeichnet, dass** die Gruppen der Balkenelemente (16a, 16b) spiegelsymmetrisch zum Code sind.

14. Sensoranordnung (1) nach Anspruch 1 bis 13, **dadurch gekennzeichnet, dass** der Positionierungssensor (4) auf einem Fahrzeug angeordnet ist, und dass der Marker (14) stationär angeordnet ist.

15. Sensoranordnung (1) nach Anspruch 14, **dadurch gekennzeichnet, dass** der Positionierungssensor (4) auf einem AGV (automated guided vehicle) (2) angeordnet ist, und dass der Marker (14) an einem Regalfach (3) angeordnet ist.

16. Verfahren zum Betrieb einer Sensoranordnung (1) mit einem geometrische Strukturen aufweisenden Marker (14) und mit einem Positionierungssensor (4), **dadurch gekennzeichnet, dass** die geometrischen Strukturen des Markers (14) im Positionierungssensor (4) bekannt sind, und dass durch Auswertung eines mit dem Positionierungssensor (4) erfassten Bildes der geometrischen Struktur des Markers (14) die Distanz und der Neigungswinkel des Markers (14) relativ zum Positionierungssensor (4) bestimmt wird, dass der Positionierungssensor (4) einen Bildsensor (5) mit einer optischen Achse (6) aufweist, wobei mit dem Bildsensor (5) ein Bild des Markers (14) aufgezeichnet wird, anhand dessen die Bestimmung der Distanz und des Neigungswinkels des Markers (14) durchgeführt wird, wobei mit dem Positionierungssensor (4) ein Neigungswinkel des Markers (14) relativ zu einer Ebene senkrecht zur optischen Achse (6) des Bildsensors (5) bestimmt wird, dass der Marker (14) einen Code aufweist, in dem ein Positionswert kodiert, dass durch Erfassen des Codes mittels des Positionierungssensors (4) eine Grobpositionierung durchgeführt wird, und dass durch Erfassen der geometrischen Struktur eine Feinpositionierung durchgeführt wird.

## Claims

1. Sensor assembly (1) with a marker (14) having geometric structures and with a positioning sensor (4), **characterised in that** the geometric structures of the marker (14) are known in the positioning sensor (4), and **in that** the distance and the angle of inclination of the marker (14) relative to the positioning sensor (4) are determined by evaluating an image of the geometric structure of the marker (14) captured by the positioning sensor (4), **in that** the positioning sensor (4) has an image sensor (5) with an optical axis (6), wherein an image of the marker (14) is recorded with the image sensor (5), on the basis of which the distance and the inclination angle of the marker (14) are determined, wherein an inclination angle of the marker (14) relative to a plane perpendicular to the optical axis (6) of the image sensor (5) is determined, that the marker (14) has a code in which a position value is encoded, that coarse positioning is carried out by detecting the code by means of the positioning sensor (4), and that fine positioning is carried out by detecting the geometric structure.

2. Sensor assembly (1) according to claim 1, **characterised in that** the position of the marker (14) in a plane perpendicular to the optical axis (6) of the image sensor (5) is determined by the positioning sensor (4).

3. Sensor assembly (1) according to one of claims 1 or 2, **characterised in that** the angle of inclination of the marker (14) is determined independently of a displacement of the marker (14) in a plane perpendicular to the optical axis (6).

4. Sensor assembly (1) according to one of claims 1 to 3, **characterised in that** the image sensor (5) has a matrix-shaped assembly of receiving elements.

5. Sensor assembly (1) according to one of claims 1 to 4, **characterised in that** a pinhole aperture (7) is arranged upstream of the image sensor (5).

6. Sensor assembly (1) according to one of claims 1 to 5, **characterised in that** the positioning sensor (4) has an illumination unit.

7. Sensor assembly (1) according to one of claims 1 to 6, **characterised in that** fine positioning is carried out by detecting the geometric structure of the marker (14) by means of the positioning sensor (4).

8. Sensor assembly (1) according to one of claims 1 to 7, **characterised in that** the geometric structures are formed by beam elements (16a, 16b) extending parallel to one another at a distance.

9. Sensor assembly (1) according to claim 8, **characterised in that** the beam elements (16a, 16b) are rectangular and all have the same width.

10. Sensor assembly (1) according to one of claims 8 or 9, **characterised in that** the code is a DataMatrix code (15) or a QR code.

11. Sensor assembly (1) according to one of claims 8 to 10, **characterised in that** the code is arranged in the centre of the marker (14).

12. Sensor assembly (1) according to one of claims 8 to 11, **characterised in that** two groups of bar elements (16a, 16b) are present on both sides of the code.

13. Sensor assembly (1) according to claim 12, **characterised in that** the groups of bar elements (16a, 16b) are mirror-symmetrical to the code.

14. Sensor assembly (1) according to claims 1 to 13, **characterised in that** the positioning sensor (4) is arranged on a vehicle and the marker (14) is arranged in a stationary manner.

15. Sensor assembly (1) according to claim 14, **characterised in that** the positioning sensor (4) is arranged on an AGV (automated guided vehicle) (2) and **in that** the marker (14) is arranged on a shelf compartment (3).

16. Method for operating a sensor assembly (1) with a marker (14) having geometric structures and with a positioning sensor (4), **characterised in that** the geometric structures of the marker (14) are known in the positioning sensor (4), and **in that** by evaluating an image of the geometric structure of the marker (14) captured by the positioning sensor (4), the distance and the angle of inclination of the marker (14) relative to the positioning sensor (4) are determined, **in that** the positioning sensor (4) has an image sensor (5) with an optical axis (6), wherein an image of the marker (14) is recorded with the image sensor (5), on the basis of which the distance and the angle of inclination of the marker (14) are determined, wherein an angle of inclination of the marker (14) relative to a plane perpendicular to the optical axis (6) of the image sensor (5) is determined with the positioning sensor (4) determines an inclination angle of the marker (14) relative to a plane perpendicular to the optical axis (6) of the image sensor (5), that the marker (14) has a code in which a position value is encoded, that by detecting the code by means of the positioning sensor (4), and that fine positioning is performed by detecting the geometric structure.

## Revendications

1. Agencement de capteurs (1) comprenant un marqueur (14) présentant des structures géométriques et un capteur de positionnement (4), **caractérisé en ce que** les structures géométriques du marqueur (14) sont connues dans le capteur de positionnement (4) et **en ce que** la distance et l'angle d'inclinaison du marqueur (14) par rapport au capteur de positionnement (4) sont déterminés par l'évaluation d'une image de la structure géométrique du marqueur (14) enregistrée avec le capteur de positionnement (4), **en ce que** le capteur de positionnement (4) comporte un capteur d'images (5) avec un axe optique (6), une image du marqueur (14) étant enregistrée avec le capteur d'images (5), à l'aide de laquelle la détermination de la distance et de l'angle d'inclinaison du marqueur (14) est effectuée, un angle d'inclinaison du marqueur (14) étant déterminé avec le capteur de positionnement (4) par rapport à un plan perpendiculaire à l'axe optique (6) du capteur d'images (5), que le marqueur (14) comporte un code dans lequel une valeur de position est codée, qu'un positionnement grossier est effectué par détection du code au moyen du capteur de positionnement (4) et qu'un positionnement fin est effectué par détection de la structure géométrique.

2. Agencement de capteurs (1) selon la revendication 1, **caractérisé en ce que** le capteur de positionnement (4) permet de déterminer la position du marqueur (14) dans un plan perpendiculaire à l'axe optique (6) du capteur d'images (5).

3. Agencement de capteurs (1) selon l'une des revendications 1 ou 2, **caractérisé en ce que** l'angle d'inclinaison du marqueur (14) est déterminé indépendamment d'un déplacement du marqueur (14) dans un plan perpendiculaire à l'axe optique (6).

4. Agencement de capteurs (1) selon l'une des revendications 1 à 3, **caractérisé en ce que** le capteur d'images (5) comporte un agencement matriciel d'éléments récepteurs.

5. Agencement de capteurs (1) selon l'une des revendications 1 à 4, **caractérisé en ce qu'**un diaphragme à trou (7) est disposé en amont du capteur d'images (5).

6. Agencement de capteurs (1) selon l'une des revendications 1 à 5, **caractérisé en ce que** le capteur de positionnement (4) comporte une unité d'éclairage.

7. Agencement de capteurs (1) selon l'une des revendications 1 à 6, **caractérisé en ce qu'**un positionnement fin est effectué par détection de la structure géométrique du marqueur (14) à l'aide du capteur de positionnement (4).

8. Agencement de capteurs (1) selon l'une des revendications 1 à 7, **caractérisé en ce que** les structures géométriques sont formées par des éléments en forme de barres (16a, 16b) parallèles et espacés les uns des autres.

9. Agencement de capteurs (1) selon la revendication 8, **caractérisé en ce que** les éléments en forme de poutre (16a, 16b) sont rectangulaires et ont tous la même largeur.

10. Agencement de capteurs (1) selon l'une des revendications 8 ou 9, **caractérisé en ce que** le code est un code DataMatrix (15) ou un code QR.

11. Agencement de capteurs (1) selon l'une des revendications 8 à 10, **caractérisé en ce que** le code est disposé au centre du marqueur (14).

12. Agencement de capteurs (1) selon l'une des revendications 8 à 11, **caractérisé en ce que** deux groupes d'éléments en forme de barres (16a, 16b) sont présents de part et d'autre du code.

13. Agencement de capteurs (1) selon la revendication 12, **caractérisé en ce que** les groupes d'éléments en forme de barres (16a, 16b) sont symétriques par rapport au code.

14. Agencement de capteurs (1) selon les revendications 1 à 13, **caractérisé en ce que** le capteur de positionnement (4) est disposé sur un véhicule et que le marqueur (14) est disposé de manière fixe.

15. Agencement de capteurs (1) selon la revendication 14, **caractérisé en ce que** le capteur de positionnement (4) est disposé sur un véhicule à guidage automatique (AGV) (2) et **en ce que** le marqueur (14) est disposé sur un rayonnage (3).

16. Procédé pour faire fonctionner un agencement de capteurs (1) avec un marqueur (14) présentant des structures géométriques et avec un capteur de positionnement (4), **caractérisé en ce que** les structures géométriques du marqueur (14) sont connues dans le capteur de positionnement (4) et **en ce que**, par l'évaluation d'une image de la structure géométrique du marqueur (14) enregistrée avec le capteur de positionnement (4), la distance et l'angle d'inclinaison du marqueur (14) par rapport au capteur de positionnement (4) sont déterminés, **en ce que** le capteur de positionnement (4) comporte un capteur d'image (5) avec un axe optique (6), une image du marqueur (14) étant enregistrée avec le capteur d'image (5), à l'aide de laquelle la détermination de la distance et de l'angle d'inclinaison du marqueur (14) est effectuée, un angle d'inclinaison du marqueur (14) par rapport à un plan perpendiculaire à l'axe optique (6) du capteur d'image (5) étant déterminé avec le capteur de positionnement (4) permet de déterminer un angle d'inclinaison du marqueur (14) par rapport à un plan perpendiculaire à l'axe optique (6) du capteur d'images (5), le marqueur (14) comportant un code dans lequel une valeur de position est codée, qu'un positionnement approximatif est effectué par détection du code au moyen du capteur de positionnement (4), et **en ce qu'**un positionnement fin est effectué par détection de la structure géométrique.

Fig. 1

# Fig. 2

## Fig. 3

$Z = Z_0$

## Fig. 4

Fig. 5

EP 4 368 945 B1

## Fig. 6

## Fig. 7

$$Z = -f$$

## Fig. 8

$$Y=0$$

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003095726 A1
- WO 2021157136 A1